# EUROPEAN PATENT SPECIFICATION

(11) **EP 3 766 665 B1**
(45) Date of publication and mention of the grant of the patent: **18.05.2022**
(21) Application number: 20186288.5
(22) Date of filing: 16.07.2020
(51) Int. Cl.: B29C 63/02, B29C 63/00

(54) **DEVICE FOR APPLYING A PROTECTIVE FILM ON A SCREEN OF AN ELECTRONIC APPARATUS**
VORRICHTUNG ZUM ANBRINGEN EINES SCHUTZFILMS AUF EINEM BILDSCHIRM EINES ELEKTRONISCHEN GERÄTS
DISPOSITIF D'APPLICATION D'UN FILM DE PROTECTION SUR UN ÉCRAN D'UN APPAREIL ÉLECTRONIQUE

(30) Priority: 17.07.2019 IT 201900012204
(43) Date of publication of application: 20.01.2021
(73) Proprietor: Accessory Line Srl, 35010 Trebaseleghe (PD) (IT)
(72) Inventor: Avoledo, Enrico, 31038 Paese (TV) (IT); De Ros, Simone, 31038 Paese (TV) (IT)
(74) Representative: Osgnach, Boris

(56) References cited:
- EP-A1- 3 381 655
- WO-A1-2015/021430

## Description

### Field of application of the invention

The present invention is related to the technical field of the accessories for electronic devices, and more specifically it concerns a device for applying a protective film to the screen of an electronic apparatus such as, for example, a smartphone, a tablet or a similar apparatus.

### State of the art

As is known, the screens of mobile electronic devices such as, for example, smartphones, tablets, industrial readers and similar devices are made of glass-based composite materials and can be damaged or even break if their external surface is rubbed against hard objects or is subjected to hard impacts.

Even if these screens substantially have the same chemical-physical characteristics as hardened glass, experience teaches that this component is still one of the most fragile components supplied together with electronic devices and the one which most of all needs to be replaced or repaired during the life cycle of said devices.

In order to protect these devices from the drawbacks mentioned above it is possible to use transparent (or semi-transparent) protective films designed to be applied to the screen in a removable manner.

These films have their lower surface covered with adhesive and intended to be superimposed to the external surface of the screen.

The main drawback that occurs during the manual application of the film to the screen of the device is represented by the need to position the film correctly, aligning its edges with those of the screen.

To obtain an optimal result, the user often needs to position the film on the screen several times and this may reduce the bonding power of the glue or increase the risk of fingerprints or marks being left on the surface of the screen or of the film.

In order to overcome said drawback, some devices have been developed which are suited to make it easier to apply the film to the screen in an automatic or semiautomatic manner and are designed in such a way as to prevent any contact between the surfaces of the film and of the screen.

Document WO2015/021430 describes a method and a device for applying a protective film to the screen of an electronic apparatus, which comprises a polygonal base provided with a seat for housing the electronic apparatus. The protective film has its underside covered with glue and provided with a flexible tab made of a polymeric material and folded on itself which respectively has a lower brush and an end projecting from the upper edge of the film. The upper surface of the film is covered with a further protective layer on which a laminar projection has been applied, said laminar projection being provided with two holes suited to allow the insertion of two holes formed on the base in proximity to the seat. The engagement of the pins in said holes makes it possible to constrain the film to the body, while the traction force exerted by the user on the tab promotes the sliding movement of the brush on the screen and the adhesion of the glue to the screen. Once the projection has been extracted from the pins, the user can remove the upper layer positioned on the film.

A first drawback of this solution lies in that the insertion of the pins in the holes formed in the projection considerably slows down the operations required for the application of the protective film to the screen of the electronic apparatus.

It is evident, in fact, that such a configuration of the applicator device requires a numerous sequence of actions to be carried out before the film can be actually applied to the screen.

More specifically, the operator must insert the pins formed on the base in the holes made in the film or in the laminar tab and must also check that the latter does not come off the pins during the application of the film.

Consequently, a further drawback associated with this solution is represented by the fact that the film is not firmly attached to the base during the application steps and this can affect the success of the operation.

A further drawback of this solution is represented by the fact that it is rather complex and the application of a protective film to the screen of the electronic apparatus takes a relatively long time, which is often a nuisance for demanding users.

Again, another and yet not the least inconvenience of this solution is represented by the fact that the complexity of the application of the protective film to the screen of the electronic apparatus increases the risk of the operator performing incorrect manoeuvres which may cause the film to adhere to the screen in a non-uniform manner and aesthetically unpleasant wrinkles and folds to appear.

### Presentation of the invention

The present invention intends to overcome the drawbacks mentioned above by providing a device for applying a protective film to the screen of an electronic apparatus, wherein said device is particularly effective and flexible during use.

More specifically, it is the main object of the present invention to provide a device for applying a protective film to the screen of an electronic apparatus which is easy to use and able to apply the film to the screen through a limited number of operations.

It is a further object of the present invention to provide a device for applying a protective film to the screen of an electronic apparatus which is simple to produce.

Again, it is another object of the present invention to provide a device for applying a protective film to a screen which guarantees a high degree of safety during use, preventing any of its parts from accidentally coming off during the application of the film to the screen.

It is another, yet not the least object of the present invention to provide a device for applying a protective film to the screen of an electronic apparatus which is particularly economic and easy to produce.

These objects, together with others that are explained in greater detail below, are achieved by a device for applying a protective film to the screen of an electronic apparatus of the type according to claim 1.

Further objects that are better illustrated further on in this description are achieved by a device for applying a protective film to the screen of an electronic apparatus according to the dependent claims from 2 to 10.

### Brief description of the drawings

The advantages and the characteristics of the present invention clearly emerge from the following detailed description of some preferred but non-limiting configurations of a device for applying a protective film to the screen of an electronic apparatus, with particular reference to the following drawings:
- Figure 1 shows an exploded perspective view of a device for applying a protective film to the screen of an electronic apparatus carried out according to a first embodiment;
- Figures 2A and 2B respectively show a top view and a side view of a first detail of the device shown in Figure 1;
- Figures 3A and 3B show partial sectional side views of a further detail of Figure 1 while it is being positioned on the support base;
- Figures 4A and 4B show top views of a support base of the device of Figure 1 in two different operating configurations;
- Figure 4C shows a partial sectional side view of the support base shown in Figures 4A and 4B.

### Detailed description of the invention

The subject of the present invention is a device for applying a protective film **P** to the screen **S** of an electronic apparatus **A.**

Said device, indicated as a whole by the reference number **1** in the drawings, can be particularly suited to allow a protective film **P** to be applied to the screen **S** of a smartphone, a tablet, a convertible notebook, an e-book reader and of all similar electronic apparatuses **A.**

Furthermore, said device **1** can be configured to apply a protective film **P** to the screen **S** of the electronic apparatus **A,** wherein said protective film **P** can be of the flexible or rigid type, according to the preferences of the user of the device or of the owner of the apparatus. Furthermore, the film **P** can be completely transparent or of the semi-transparent type.

The protective film **P** has an upper surface **P'** and a lower surface **P"** to which an adhesive layer **J** is applied, said adhesive layer **J** being suited to allow the lower surface **P"** to adhere to the external surface **S'** of the screen **S.**

The adhesive layer **J** can cover the lower surface **P"** of the film **P** completely or can be distributed only on a portion (or on several portions) of the same.

The device comprises a support base **2** provided with at least one housing **3** for the positioning of the electronic apparatus **A.**

More specifically, the support base **2** can have a substantially polygonal shape and on the same it will be possible to obtain a housing **3** in a substantially rectangular shape, which is suited to allow the precise positioning of the electronic apparatus **A,** that is, to allow the latter to be positioned with a reduced play.

As is better clarified later on in this description, the relatively precise positioning of the electronic apparatus **A** in the housing **3** makes it possible to define a fixed and stable position of the apparatus **A** with respect to the other components of the device **1** which are used during the operations required for the application of the film **P.**

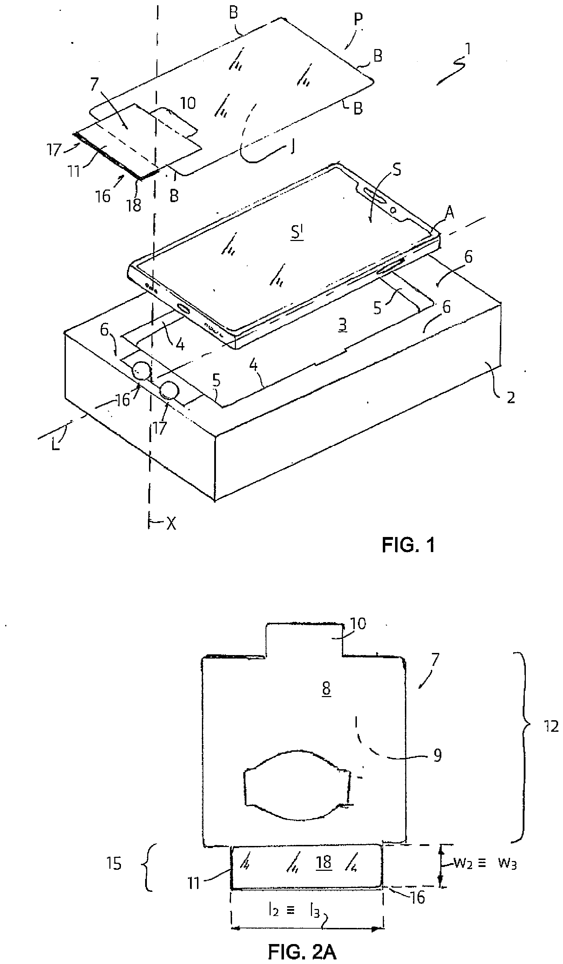

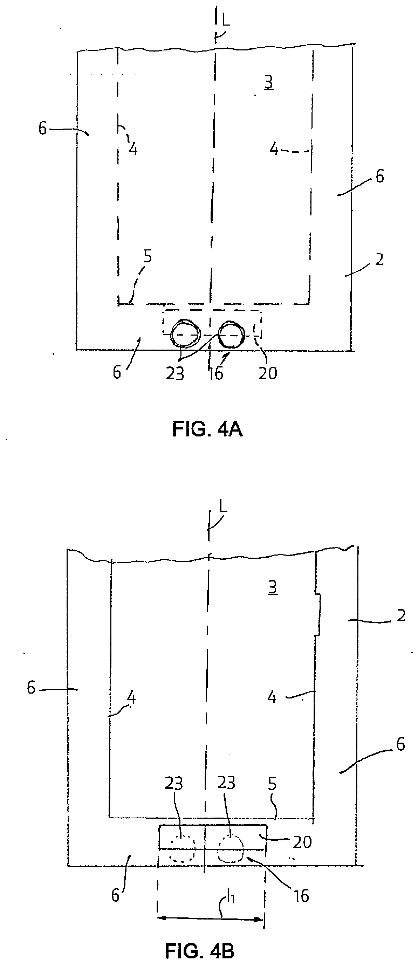

In the configuration of the device illustrated in the figures, and more specifically in **Figure 1** and in **Figures 4A** and **4B****,** the support base **2** has a housing **3** with fixed dimensions.

However, in different configurations of the device which are not visible in the figures the housing **3** can have variable dimensions in order to allow electronic apparatuses of different sizes to be positioned therein, wherein the length and width of said apparatuses can vary between a minimum and a maximum predetermined value.

According to the invention, in order to obtain this result one or more terminal edges **4, 5** of the housing (for example, the edge **4** associated with the length of the electronic apparatus, or the edge **5** associated with its width, or both edges **4, 5)** can be movable with respect to the support base **2** between two predetermined terminal positions suited to define, respectively, the minimum and the maximum dimension of the apparatus **A** that allow the latter to be inserted in the housing **3.**

The support base **2** furthermore comprises at least one edge portion **6** extending on the periphery of the housing **3.**

More specifically, the edge portion **6** formed on the base **2** defines at least one terminal edge **4, 5** which delimits the housing **3.** In the configuration of the support base **2** illustrated in **Figure 1** there are four edge portions **6** arranged peripherally on all sides of the housing **3.**

Thus, the latter is delimited by four terminal edges **4, 5** suited to delimit both the corresponding edge portion **6** (four of these being present) and the housing **3.**

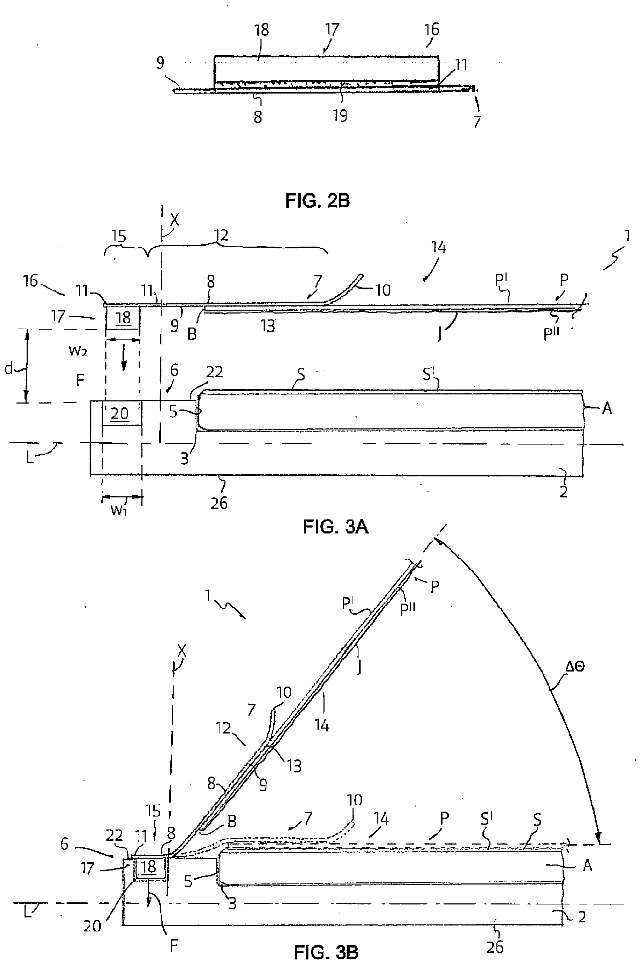

Conveniently, the device **1** comprises a flexible laminar element **7,** better illustrated in **Figures 2A** and **2B****,** provided with an upper surface **8** and a lower surface **9.**

The shape of the laminar element **7** in a plan view can be substantially considered as a rectangle to which one pair of terminal projections **10, 11** has been applied.

The lower surface **9** of the laminar element **7** has a first portion **12** at least partially covered with an adhesive layer **13** and intended to be superimposed to the upper surface **P"** of the film **P** in such a way as to form with the latter a unit assembly indicated by the reference number **14** in **Figure 1** and in **Figure 3A****.**

The lower surface **9** of the flexible laminar element **7** has also a second portion 16 arranged beside the first portion **12.**

In the configuration of the laminar element illustrated in **Figure 2A****,** the first portion **12** of the lower surface **9** has a rather large extension, as it occupies almost the entirety of the area enclosed by the rectangular shape that defines the main part of the laminar element **7.**

The upper projection **10** does not belong to the first portion **12** and therefore no adhesive is applied to the same. In this way, said projection **10** can be easily grasped by the user to remove the flexible laminar element **7** from the protective film **P** following the application of the latter to the screen **S** of the apparatus.

In **Figure 2A** it is possible to observe also the second portion **15** of the lower surface **9,** which substantially occupies the area enclosed by the lower projection **11** of the flexible laminar element **7.**

Means **16** are also provided, which are suited to promote the removable coupling of the unit assembly **14** with the edge portion **6** of the support base.

This coupling is suited to allow the protective film **P** to rotate around a predetermined hinge axis **X.**

In the device illustrated in the figures the support base has a longitudinal development axis **L** and the hinge axis **X** lies substantially crosswise with respect to said development axis **L.**

More specifically, during the use of the device **1** the development axis **L** will be arranged in a substantially horizontal position and therefore the hinge axis **X** will be substantially parallel to the vertical.

The peculiar characteristic of the coupling means **16** lies in that they promote the selective and removable coupling of the second portion **15** of the flexible laminar element **7** with the edge portion **6** formed on the base **2.**

This condition is clearly illustrated in **Figure 3A** and in **Figure 3B****,** in which it is possible to observe the coupling between the unit assembly **14** and the edge portion **6** formed on the support base **2.**

More specifically, **Figure 3B** illustrates the position of the protective film **P** before its application to the screen **S** of the electronic apparatus **A.**

The coupling means **16** are configured to allow the assembly **14** (and in particular the film **P)** to selectively rotate around the hinge axis **X** between an initial position, in which the film **P** is not in contact with the screen **S,** and a final position, in which the adhesive layer **J** distributed on the lower surface **P"** of the film **P** is in contact with the upper surface **S'** of the screen **S.**

**Figure 3A** shows the film **P** in the initial position, while **Figure 3B** shows the film **P** in the final position.

In other words, the coupling means **16** are able to promote the rotation of the assembly **14** around the hinge axis **X** over an angular amplitude **Δθ** smaller than a straight angle (and typically close to a right angle); it is evident that this angular amplitude **Δθ** is delimited by the initial and final position of the film **P.**

According to a peculiar aspect of the invention, the coupling means **16** comprise at least one magnetic element **17** associated with the second portion **15** of the flexible laminar element **7** and/or with the corresponding edge portion **6** formed on the support base **2.**

In the configuration of the device illustrated in the **Figures** from **2A** to **3B,** there is a single magnetic element **17** associated with the second portion **15** of the laminar element **7.**

In this case the magnetic element **17** is constituted by a substantially laminar metallic plate **18** that completely covers the second portion **15** of the lower surface **9** of the flexible laminar element **7.**

This plate **18** can be a permanent magnet or an element obtained from a permanent magnetic material such as, for example, neodymium or other rare-earth elements similar to it.

More specifically, as is better visible in **Figures 2B** and **3A****,** the second portion **15** is covered by a thin adhesive layer **19** suited to promote the stable coupling of the magnetic element **18,** that is, of the metallic plate **19,** with the lower surface **9** of the flexible laminar element **7.**

The magnetic plate **18** is configured to interact with the corresponding edge portion 6 in such a way as to removably hold the unit assembly **14** on the base **2.**

More specifically, the area of the edge portion **6** designed to be coupled with the magnetic plate **18** is made of a ferromagnetic material.

When these two components are at a close distance from each other, an attraction force **F** is generated which acts on the plate **18** and is directed towards the base **2;** said force **F,** illustrated in **Figure 3A****,** causes the components **18, 2** to move towards each other until they come in contact with each other.

The magnetic force **F** that maintains the plate **18** in contact with the base **2** thus makes it possible to maintain the base **2** substantially coupled with the unit assembly **14** in a removable manner.

Conveniently, it is rather common to make the entire edge portion **6** or the entire support base **2** from a ferromagnetic material (ferrous alloys, steel, etc).

When the magnetic plate **18** is coupled with the base **2,** the protective film **P** is free to selectively rotate around the hinge axis **X** between its initial position and its final position, as better illustrated in **Figures 3A** and **3B****.**

In order to increase the magnetic force F generated by the coupling means **16,** it is possible to use several magnetic elements **17** (for example, magnetic plates **18)** superimposed to one another and positioned in proximity of the second portion **15** of the lower surface **9** of the flexible laminar element **7.**

The edge portion **6** can be provided with a shaped recess, indicated by the reference number **20** in the figures, which is positioned in proximity to the area where it interacts with the second portion **15** of the lower surface **9** of the flexible laminar element **7.**

More specifically, the dimensions **l₁**, **w₁** of said recess **20** are selected in such a way that they are substantially the same as the dimensions **l₂, w₂** of the magnetic element **17,** that is, as the dimensions of the plate **18.**

In this way, when the operator promotes the coupling of the unit assembly **14** with the edge portion **6,** the magnetic plate **18** comes to be positioned inside the recess **20,** so that the upper surface **8** of the flexible laminar element **7** is substantially flush with (or slightly above) the upper surface **22** of the edge portion **6.**

This condition is clearly visible in **Figure 3B****.**

Preferably, the magnetic plate **18** can be inserted in the recess **20** with a relatively reduced play, in such a way as to define a fixed reference position of the unit assembly **14** with respect to the housing **3.**

In an alternative configuration of the device **1,** illustrated in **Figures** from **4A** to **4C,** several magnetic elements **17** are used, in this case associated with the edge portion **6** of the support base **2.**

More specifically, said magnetic elements **17** are positioned in the edge portion **6** in proximity to the area where the latter interacts with the second portion **15** of the flexible laminar element **7.**

On the edge portion **6** there can be one or more seats **23** which are suitable for the insertion of corresponding magnetic elements **17.**

**Figure 4A** shows a support base **2** whose edge portion **6** is provided with one pair of seats **23** with circular cross section, inside which respective cylindrical magnetic elements **17** are inserted.

For example, it will be possible to insert inside each seat a permanent magnet **24** obtained from a piece of permanent magnetic material having a cylindrical shape.

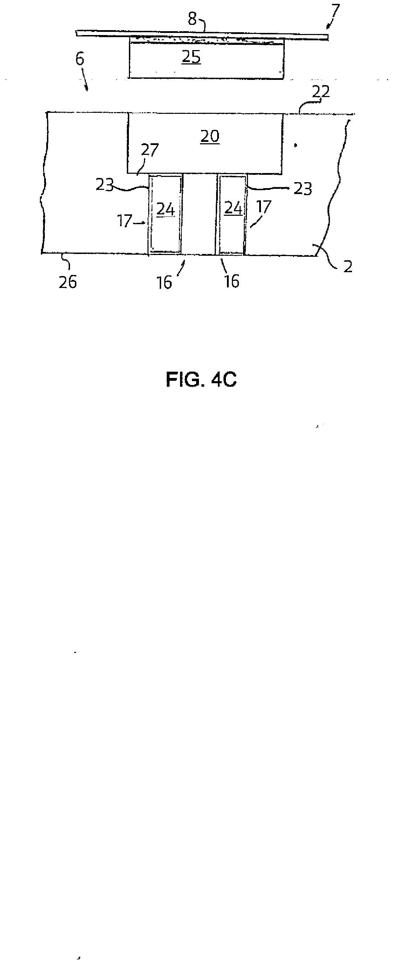

This condition can be observed in **Figure 4C**, however it should be underlined that the shape of the seat **23,** the shape of the magnetic elements **24** and the number of the latter can be different from those illustrated in the Figures and can vary according to the construction and/or operational needs associated with the specific device **1.**

More specifically, the larger the number of magnetic elements **17** inserted in the seats **23,** the stronger the magnetic attraction force **F** generated by the same on the second portion **15** of the lower surface **9** of the flexible laminar element **7.**

The result is thus evident, since an increase in the number of magnetic elements **17** included in the device **1** will result in a corresponding increase of the coupling force **F** generated between the unit assembly **14** and the edge portion **6** of the support base **2.**

According to the configuration of the device illustrated in **Figures** from **4A** to **4C,** a ferromagnetic metallic element **25** is applied to the second portion **15** of the flexible laminar element **7.**

This ferromagnetic metallic element is suited to interact with the magnetic element **17** integral with the edge portion **6** once the operator has coupled the unit assembly **14** with the support base **2.**

More specifically, also in this case the ferromagnetic element **25** integral with the second portion **15** of the laminar element **7** can be a metallic plate (this time made of a metallic material which is not a permanent magnetic material).

Similarly to what has already been described with reference to the first configuration of the invention, when the distance **d** that separates the metallic plate **25** from the edge portion **6** is relatively reduced, a magnetic force **F** acting on the ferromagnetic plate **25** and directed towards the edge portion **6** is generated between said two components.

When the plate **25** is in contact with the edge portion **6,** the value of this magnetic attraction force **F** is sufficient to promote the stable and removable coupling of the unit assembly **14** with the edge portion **6,** that is, with the support base **2.**

In these conditions, the protective film **P** can freely rotate around the hinge axis **X** between its terminal positions.

The metallic plate **25** can be fixed to the second portion through an adhesive layer **19** previously spread on the latter.

According to the invention, also in this configuration there can be a recess **20** formed on the edge portion **6** and suited to allow the insertion of the metallic plate **25** once the unit assembly **14** has been coupled with the support base **2.**

More specifically, the dimensions **l**_{**1**,} **w₁** of said recess **20** are selected in such a way that they are substantially the same as the dimensions **l₃, w₃** of the ferromagnetic plate **25.**

In this way, when the operator carries out the coupling between the unit assembly **14** and the edge portion **6,** the ferromagnetic plate **25** comes to be positioned inside the recess **20,** so that the upper surface **8** of the flexible laminar element **7** is substantially flush with (or slightly above) the upper surface **22** of the edge portion **6.**

Preferably, the ferromagnetic plate **25** can be inserted in the recess **20** with a relatively reduced play, in such a way as to define a fixed reference position of the unit assembly **14** with respect to the housing **3.**

As is better visible in **Figure 4C**, the seats **23** obtained in the edge portion **6** of the base **2** can be substantially through seats and extend from the lower surface **26** of said base **2** to the bottom surface **27** of the recess **20.**

According to the invention, in a further configuration of the device (not illustrated in the figures) magnetic elements **17** can be used which are applied in a stable manner both to the second portion **15** of the laminar element **7** and to the edge portion **6** of the support base **2.**

In this case, therefore, the magnetic elements **18** anchored to the second portion **15** of the laminar element **7** can have opposite magnetic polarity with respect to the magnets **24** anchored to the edge portion **6** of the support base **2.**

In this way, the force **F** generated between the second portion **15** of the flexible laminar element **7** and the edge portion **6** will be an attraction force, so as to promote the movement of the unit assembly **14** towards the support base **2** and their removable mutual coupling.

From the operational point of view, firstly the operator provides for placing the electronic apparatus **A** inside the corresponding housing **3** formed in the support base **2.**

Successively, the operator promotes the adhesion of the first portion **12** of the lower surface **9** of the flexible laminar element **7** to the upper surface **P"** of the film **P** or, alternatively, to the layer of protective film that covers said surface (if provided).

This adhesion promotes the formation of a unit assembly **14** which in a successive step will be coupled with the edge portion **6** formed on the base **6.**

While positioning the first portion **12** of the laminar element **7** so that it adheres to the upper surface **P"** of the film **P,** the operator must take care to maintain the second portion **15** of the lower surface **9** of the laminar element **7** in a projecting position with respect to the external edge **B** of the film **P.**

Alternatively, the first portion **12** of the lower surface **9** of the laminar element **7** can be applied to the film **P** in a previous step, so that the operator, when he/she intends to proceed with the application of the film **P** to the screen **S** of an electronic apparatus **A,** can already have at his/her disposal the unit assembly **14** which must simply be coupled with the support base **2** of the device **1.**

In fact, a magnetic element **17** and/or a metallic ferromagnetic element **25** designed to interact with the support base **2** are applied to the second portion **158** of the flexible laminar element.

At this point the operator manually moves the second portion **15** towards the edge portion **2,** wherein these two elements must be moved towards each other until a mutual magnetic attraction force **F** is generated between them.

This magnetic force **F** is generated by the magnetic element **17** (or by the magnetic elements) which is integral with the edge portion **6** (for example, cylindrical permanent magnets **24)** or integral with the second portion **23** of the laminar element **7** (for example, a magnetic plate **18).**

The action of said force **F** promotes the automatic and spontaneous contact of the second portion **15** of the lower surface **9** of the laminar element **7** with the edge portion **6.**

The magnetic element **17** and/or the ferromagnetic element **25** which is/are integral with the second portion **15** of the laminar element **7** can be inserted in the recess **20** formed in the support base **2,** if said recess has been obtained in the latter.

Following said contact, a stable (but removable) coupling between the unit assembly **14** and the base **2** is generated, and therefore in these conditions the operator can promote the rotation of the film **P** around the hinge axis **X** from the detached terminal position to the position of contact with the upper surface **S'** of the screen **S.**

If the film **P** is provided with a lower protective layer suited to protect the adhesive, the operator will take care to remove said protective layer before promoting the contact between the film **P** and the screen **S** of the apparatus **A.**

A slight pressure exerted by the operator with his/her fingers on the upper surface of the film **P'** will make it possible to obtain the uniform adhesion of the adhesive layer **J** spread on its lower surface **P"** to the screen **S** of the apparatus **A.**

At the end of this operation, the operator can grasp the upper terminal projection **10** of the flexible laminar element **7** (on which no adhesive has been spread) in order to use it as an element on which it is possible to act to separate the laminar element **7** from the film **P.**

By applying a traction force towards the outside on said projection **10,** the operator can remove the first portion **12** of the lower surface **9** of the laminar element **7** from the upper surface **P'** of the film **P,** actually eliminating from the latter the presence of any external element superimposed to it.

At this point the operator can extract the apparatus **A** from the housing **3** formed in the support base **2,** since the film is now applied to the screen **S** of the apparatus **A** in a stable manner and it is no more necessary to use the device **1.**

## Claims

1. A device for applying a protective film (P) to the screen (S) of an electronic apparatus (A), wherein the protective film (P) has an upper surface (P') and a lower surface (P") at least partially covered by an adhesive layer (J) intended to be applied to the screen (S) of the apparatus (A), said device comprising:
- a support base (2) provided with at least one housing (3) for the positioning of the electronic apparatus (A);
- at least one edge portion (6) formed in said support base (2) and arranged on the periphery of said at least one housing (3);
- a flexible laminar element (7) with a lower surface (9) provided with a first portion (12) at least partially covered with an adhesive layer (13) and with a second portion (15) placed beside said first portion (12), said first portion (12) being intended to be superimposed to the upper surface (P') of the film (P) in such a way as to create a unit assembly (14) with the latter;
- means (16) for the selective coupling of said unit assembly (14) with said at least one edge portion (6), said coupling means (16) being suited to allow the protective film (P) to selectively rotate around a predetermined hinge axis (X);
wherein said coupling means (16) are designed to promote the selective and removable coupling of the second portion (15) of the lower surface (9) of said flexible laminar element (7) with said at least one edge portion (6) of said support base (2);
**characterized in that** said coupling means (16) comprise at least one magnetic element (17) associated with said second portion (15) of the lower surface (9) of said flexible laminar element (7) and/or with said at least one edge portion (6) of said base (P).

2. Device according to claim 1, **characterized in that** at least the area of said at least one edge portion (6) designed to be coupled with said second portion (15) of said flexible laminar element (7) is made of a metallic ferromagnetic material.

3. Device according to claim 2, **characterized in that** said at least one magnetic element (17) is integral with the second portion (15) of said flexible laminar element (7) and is suited to interact with the coupling area of said at least one ferromagnetic edge portion (6) made of a ferromagnetic material to promote the removable restraint of said unit assembly (14) to said support base (2).

4. Device according to claim 3, **characterized in that** said second portion (15) of said flexible laminar element (7) is covered by an adhesive layer (6) in such a way as to allow it to be anchored to said at least one magnetic element (17).

5. Device according to one or more of the previous claims, **characterized in that** said at least one magnetic element (17) is made up of one or more permanent magnets, each of said permanent magnets being constituted by a substantially laminar plate (18).

6. Device according to claim 1, **characterized in that** said coupling means (16) comprise at least one magnetic element (17) integral with said at least one edge portion (6) of said base (2), said at least one magnetic element (17) being placed substantially in proximity to the coupling area between said second portion (15) of said laminar element (7) and said at least one edge portion (6).

7. Device according to claim 6, **characterized in that** said at least one edge portion (6) comprises one or more seats (23) designed to house said at least one magnetic element (17).

8. Device according to claim 6 or 7, **characterized in that** said coupling means (16) comprise a metallic ferromagnetic element (25) integral with said second portion (15) of said flexible laminar element (7), said metallic ferromagnetic element (25) being intended to interact with said at least one magnetic element (17) housed in said one or more seats (23).

9. Device according to one or more of the previous claims, **characterized in that** said at least one edge portion (6) has a shaped recess (20) positioned in proximity to the area where it is coupled with said second portion (15) of said flexible laminar element (7).

10. Device according to claim 9, **characterized in that** the dimensions (l₁, w₁) of said recess (20) are substantially equal to the dimensions (l₂, w₂ ; l₃, w₃) of said magnetic element (17) or of said metallic ferromagnetic element (25) which are integral with said second portion (15) in such a way as to allow said element (17, 25) to be inserted in said recess (20) in order to position the upper surface (8) of said flexible laminar element (7) substantially flush with the upper surface (22) of said at least one edge portion (6) once said unit assembly (14) has been coupled with said support base (2).

## Patentansprüche

1. Vorrichtung zum Anbringen eines Schutzfilms (P) auf dem Bildschirm (S) eines elektronischen Geräts (A), wobei der Schutzfilm (P) eine obere Oberfläche (P') aufweist sowie eine untere Oberfläche (P"), die wenigstens teilweise von einer Kleberschicht (J) bedeckt ist, welche dazu bestimmt ist, auf dem Bildschirm (S) des Geräts (A) angebracht zu werden, wobei die besagte Vorrichtung Folgendes umfasst:
- eine Tragbasis (2) mit wenigstens einer Aufnahme (3) zur Positionierung des elektronischen Geräts (A);
- wenigstens einen in der besagten Tragbasis (2) gebildeten und am Umfang der besagten wenigstens einen Aufnahme (3) angeordneten Kantenabschnitt (6);
- ein flexibles blätterförmiges Element (7), dessen untere Oberfläche (9) einen ersten, wenigstens teilweise mit einer Kleberschicht (13) bedeckten Abschnitt (12) sowie einen zweiten, neben dem besagten ersten Abschnitt (12) positionierten Abschnitt (15) aufweist, wobei der besagte erste Abschnitt (12) dazu bestimmt ist, derart auf die obere Oberfläche (P') des Films (P) aufgelegt zu werden, dass er mit Letzterem eine einheitliche Anordnung (14) bildet;
- Mittel (16) zur selektiven Verbindung der besagten einheitlichen Anordnung (14) mit dem besagten wenigstens einen Kantenabschnitt (6), wobei die besagten Verbindungsmittel (16) dazu geeignet sind, es dem Schutzfilm (P) zu erlauben, wahlweise um eine vorbestimmte Scharnierachse (X) zu rotieren;
wobei die besagten Verbindungsmittel (16) darauf ausgelegt sind, die wahlweise und abnehmbare Verbindung des zweiten Abschnitts (15) der unteren Oberfläche (9) des besagten flexiblen, blätterförmigen Elements (7) mit dem besagten wenigstens einen Kantenabschnitt (6) der besagten Tragbasis (2) zu begünstigen;
**dadurch gekennzeichnet, dass** die besagten Verbindungsmittel (16) wenigstens ein magnetisches Element (17) umfassen, das mit dem besagten zweiten Abschnitt (15) der unteren Oberfläche (9) des besagten flexiblen, blätterförmigen Elements (7) und/oder mit dem besagten wenigstens einen Kantenabschnitt (6) der besagten Basis (P) verbunden ist.

2. Vorrichtung nach Patentanspruch 1, **dadurch gekennzeichnet, dass** wenigstens der Bereich des besagten wenigstens einen Kantenabschnitts (6), der darauf ausgelegt ist, mit dem besagten zweiten Abschnitt (15) des besagten flexiblen, blätterförmigen Elements (7) verbunden zu werden, aus metallischem, ferromagnetischem Material besteht.

3. Vorrichtung nach Patentanspruch 2, **dadurch gekennzeichnet, dass** das besagte wenigstens eine magnetische Element (17) mit dem zweiten Abschnitt (15) des besagten flexiblen, blätterförmigen Elements (7) eine Einheit bildet und dazu geeignet ist, mit dem Verbindungsbereich des besagten wenigstens einen, aus einem ferromagnetischen Material gefertigten ferromagnetischen Kantenabschnitts (6) zu interagieren, um die abnehmbare Befestigung der besagten einheitlichen Anordnung (14) an der besagten Tragbasis (2) zu begünstigen.

4. Vorrichtung nach Patentanspruch 3, **dadurch gekennzeichnet, dass** der besagte zweite Abschnitt (15) des besagten flexiblen, blätterförmigen Elements (7) derart von einer Kleberschicht (6) bedeckt ist, dass er an dem besagten wenigstens einen magnetischen Element (17) verankert werden kann.

5. Vorrichtung nach einem oder mehreren der vorstehenden Patentansprüche, **dadurch gekennzeichnet, dass** das besagte mindestens eine magnetische Element (17) aus einem oder mehreren Dauermagneten gebildet ist, wobei jeder der besagten Dauermagneten aus einer im Wesentlichen blätterförmigen Platte (18) besteht.

6. Vorrichtung nach Patentanspruch 1, **dadurch gekennzeichnet, dass** die besagten Verbindungsmittel (16) wenigstens ein magnetisches Element (17) umfassen, das mit dem besagten wenigstens einen Kantenabschnitt (6) der besagten Basis (2) eine Einheit bildet, wobei das besagte wenigstens eine magnetische Element (17) im Wesentlichen in der Nähe des Verbindungsbereichs zwischen dem besagten zweiten Abschnitt (15) des besagten blätterförmigen Elements (7) und dem besagten wenigstens einen Kantenabschnitt (6) positioniert ist.

7. Vorrichtung nach Patentanspruch 6, **dadurch gekennzeichnet, dass** der besagte wenigstens eine Kantenabschnitt (6) eine oder mehrere Aufnahmen (23) umfasst, die darauf ausgelegt sind, das besagte wenigstens eine magnetische Element (17) aufzunehmen.

8. Vorrichtung nach Patentanspruch 6 oder 7, **dadurch gekennzeichnet, dass** die besagten Verbindungsmittel (16) ein metallisches ferromagnetisches Element (25) umfassen, das mit dem besagten zweiten Abschnitt (15) des besagten flexiblen, blätterförmigen Elements (7) eine Einheit bildet und dazu konzipiert ist, mit dem besagten wenigstens einen magnetischen Element (17), das in der besagten einen bzw. den mehreren Aufnahmen (23) aufgenommen ist, zusammenzuwirken.

9. Vorrichtung nach einem oder mehreren der vorstehenden Patentansprüche, **dadurch gekennzeichnet, dass** der wenigstens eine Kantenabschnitt (6) eine geformte Vertiefung (20) aufweist, die in der Nähe des Bereichs positioniert ist, in dem er mit dem besagten zweiten Abschnitt (15) des besagten flexiblen, blätterförmigen Elements (7) verbunden ist.

10. Vorrichtung nach Patentanspruch 9, **dadurch gekennzeichnet, dass** die Abmessungen (l₁, w₁) der besagten Vertiefung (20) im Wesentlichen den Abmessungen (l₁, w₂, l₃, w₃) des besagten magnetischen Elements (17) oder des besagten metallischen ferromagnetischen Elements (25) entsprechen, welche mit dem besagten zweiten Abschnitt (15) derart eine Einheit bilden, dass das besagte Element (17, 25) in die besagte Vertiefung (20) eingesetzt werden kann, um die obere Oberfläche (8) des besagten flexiblen, blätterförmigen Elements (7) im Wesentlichen mit der oberen Oberfläche (22) des besagten wenigstens einen Kantenabschnitts (6) bündig zu positionieren, nachdem die besagte einheitliche Anordnung (14) mit der besagten Tragbasis (2) verbunden wurde.

## Revendications

1. Un dispositif pour l'application d'une pellicule protectrice (P) à l'écran (S) d'un appareil électronique (A), où la pellicule protectrice (P) présente une surface supérieure (P') et une surface inférieure (P") au moins partiellement recouvertes d'une couche adhésive (J) destinée à être appliquée à l'écran (S) de l'appareil (A), ledit dispositif comprenant :
- une base de support (2) dotée d'au moins un logement (3) pour le positionnement de l'appareil électronique (A) ;
- au moins une portion de bord (6) formée dans ladite base de support (2) et disposée sur la périphérie dudit au moins un logement (3) ;
- un élément laminaire flexible (7) avec une surface inférieure (9) doté d'une première portion (12) au moins partiellement recouverte d'une couche adhésive (13) et d'une deuxième portion (15) disposée à côté de ladite première portion (12), ladite première portion (12) étant destinée à être superposée sur la surface supérieure (P') de la pellicule (P) de manière à créer un montage unitaire (14) avec cette dernière ;
- des moyens (16) pour le raccordement sélectif dudit montage unitaire (14) avec ladite au moins une portion de bord (6), lesdits moyens de raccordement (16) étant indiqués pour consentir à la pellicule protectrice (P) de tourner sélectivement autour d'un axe charnière prédéterminé (X) ;
où lesdits moyens de raccordement (16) sont conçus pour faciliter le raccordement sélectif et amovible de ladite deuxième portion (15) de la surface inférieure (9) dudit élément laminaire flexible (7) avec ladite au moins une portion de bord (6) de ladite base de support (2) ;
**caractérisé en ce que** lesdits moyens de raccordement (16) comprennent au moins un élément magnétique (17) associé avec ladite deuxième portion (15) de la surface inférieure (9) dudit élément laminaire flexible (7) et/ou avec ladite au moins une portion de bord (6) de ladite base (P).

2. Dispositif selon la revendication 1, **caractérisé en ce qu'**au moins la zone de ladite au moins une portion de bord (6) conçue pour être reliée à ladite deuxième portion (15) dudit élément laminaire flexible (7) est réalisée en un matériau ferromagnétique métallique.

3. Dispositif selon la revendication 2, **caractérisé en ce que** ledit au moins un élément magnétique (17) est solidaire de la deuxième portion (15) dudit élément laminaire flexible (7) et est indiqué pour interagir avec la zone de raccordement de ladite au moins une portion de bord ferromagnétique (6) réalisée en un matériau ferromagnétique pour faciliter le blocage amovible dudit montage unitaire (14) à ladite base de support (2).

4. Dispositif selon la revendication 3, **caractérisé en ce que** ladite deuxième portion (15) dudit élément laminaire flexible (7) est recouverte d'une couche adhésive (6) de manière à ce qu'elle soit ancrée audit au moins un élément magnétique (17).

5. Dispositif selon l'une ou plusieurs des revendications précédentes, **caractérisé en ce que** ledit au moins un élément magnétique (17) se compose d'un ou plusieurs aimants permanents, chacun desdits aimants permanents étant constitué d'une plaque essentiellement laminaire (18).

6. Dispositif selon la revendication 1, **caractérisé en ce que** lesdits moyens de raccordement (16)comprennent au moins un élément magnétique (17) solidaire de ladite au moins une portion de bord (6) de ladite base (2), ledit au moins un élément magnétique (17) étant positionné essentiellement à proximité de la zone de raccordement entre ladite deuxième portion (15) dudit élément laminaire (7) et ladite au moins une portion de bord (6).

7. Dispositif selon la revendication 6, **caractérisé en ce que** ladite au moins une portion de bord (6) comprend un ou plusieurs sièges (23) conçus pour accueillir ledit au moins un élément magnétique (17).

8. Dispositif selon la revendication 6 ou 7, **caractérisé en ce que** lesdits moyens de raccordement (16) comprennent un élément ferromagnétique métallique (25) solidaire de ladite deuxième portion (15) dudit élément laminaire flexible (7), ledit élément ferromagnétique métallique (25) étant destiné pour interagir avec ledit au moins un élément magnétique (17) logé dans lesdits un ou plusieurs sièges (23).

9. Dispositif selon l'une ou plusieurs des revendications précédentes, **caractérisé en ce que** ladite au moins une portion de bord (6) présente une cavité galbée (20) positionnée à proximité de la zone où elle est reliée à ladite deuxième portion (15) dudit élément laminaire flexible (7).

10. Dispositif selon la revendication 9, **caractérisé en ce que** les dimensions (l₁, w₁) de ladite cavité (20) sont essentiellement égales aux dimensions (l₂, w₂ ; l₃, w₃) dudit élément magnétique (17) ou dudit élément ferromagnétique métallique (25) qui sont solidaires de ladite deuxième portion (15) de manière à consentir que ledit élément (17, 25) soit inséré dans ladite cavité (20) de manière à positionner la surface supérieure (8) dudit élément laminaire flexible (7) essentiellement aligné avec la surface supérieure (22) de ladite au moins une portion de bord (6) une fois que ledit montage unitaire (14) a été relié à ladite base de support (2).
